# EUROPEAN PATENT SPECIFICATION

(11) **EP 1 155 560 B1**
(45) Date of publication and mention of the grant of the patent: **15.08.2007**
(21) Application number: 00911969.4
(22) Date of filing: 25.02.2000
(51) Int. Cl.: H04M 7/00, H04L 12/64, H04L 29/12

(54) **AUTOMATIC CONVERSION OF TELEPHONE NUMBER TO INTERNET PROTOCOL ADDRESS**
AUTOMATISCHES UMSETZEN VON TELEFONNUMMERN ZU INTERNET PROTOKOLLADRESSEN
CONVERSION AUTOMATIQUE DE NUMEROS DE TELEPHONE EN ADRESSES IP

(30) Priority: 26.02.1999 US 122248 P
(43) Date of publication of application: 21.11.2001
(73) Proprietor: Avaya Technology Corp., Miami Lakes, Florida 33014 (US)
(72) Inventor: BRAND, Joel, Danville, CA 94506 (US)
(74) Representative: Reeve, Anna Elizabeth
(86) International application number: PCT/US2000/004822
(87) International publication number: WO 2000/051331

(56) References cited:
- EP-A- 0 905 959
- WO-A-98/11704
- WO-A-99/29083

## Description

This invention relates to the field of telecommunications communications systems. More particularly, this invention relates to the field of telecommunications systems employing the Internet Protocol network.

### Background of the Invention

The Internet Protocol network (also collectively known as the "Internet") has steadily increased in popularity as a way for users to broadcast and receive information to and from other parties. Presently, transmission of information relating to audio, textual, and/or graphical data over the Internet is quite common either through electronic mail or websites. Further, this transmission of information is typically received by a computer. Transmission of information over the Internet is often times faster compared to conventional mail and more cost effective compared toll telephone calls utilizing land lines.

There is a growing need to provide audio communication over the Internet which alerts a recipient party through a conventional telephone of an incoming audio communication and also allows the recipient party to send and receive the audio communication through the conventional telephone. Presently, there are solutions which are based on localized look up tables (databases) that contain a telephone number and a corresponding Internet Protocol address. These localized databases rely on the Internet to transmit the telephone number and the corresponding Internet Protocol address belonging to the recipient.

Being localized and relying solely on the Internet, these localized databases have a variety of disadvantages. First, these localized databases are not a scalable solution because standard interfaces across multiple service providers are not properly defined. Each service provider is free to adopt a localized database using their unique format. Further, because the Internet is not limited by geographical boundaries, standardizing all these localized databases which are maintained and operated by independent service providers are virtually impossible. Second, instead of one centralized database or a group of localized databases which are coupled together, the prior solution utilizing independent, localized databases leads to increased maintenance costs, increased network administration costs, and less efficient resource utilization. Finally, the notion of utilizing independent, localized databases which cannot be coupled together neither allows compatibility with mobile telephone services nor number portability applications.

What is needed is a conversion system that allows a recipient to receive a communication through a conventional telephone wherein the communication is transmitted via the Internet. Further, what is needed is a conversion system that maintains a database which is standardized and remains global. Finally, what is also needed is a conversion system that utilizes the messaging capabilities of an Intelligent Network service such as signalling system no. 7 protocol.

Australian Patent Application AU-A-1998 78604 discloses a telephone system for establishing a link over a packet-switched-network between two telephone interfaces by exchanging network addresses. The interfaces exchange speech data packets of speech signals from a call party telephone and a calling party telephone over the network. An interface converts the speech signals of the parties into speech data packets. The system dynamically allocates network and interface resources to complete the telephone call transaction. In particular, AU-A-1998 78604 discloses a system for transmitting a message over an Internet Protocol network from a calling party to a telephone number of a recipient party, the system comprising a database for storing the telephone number of the recipient party and a corresponding IP address; and a control point coupled to the Internet Protocol network and the calling party and a method of placing a message originating from a calling party through an Internet Protocol network to a telephone number of a recipient party, the method comprising the following steps: inputting the telephone number of the recipient party via an input device, wherein the input device is coupled to the Internet Protocol network; and transmitting the telephone number to a control point, wherein the control point is coupled to the input device, the Internet Protocol network, and a telephone network.

International Patent Application published as WO-A-9811704 discloses a dedicated appliance for packet-switched voice communication with a mechanism to ensure that both the caller and a recipient of voice communication having a similar appliance have a connection to the packet-switch network. The caller's appliance may cause a recipient's appliance to connect to the packet-switch network through the access medium of the recipient. Also, switching may be enabled between circuit-switch and packet-switch voice communications permitting both kinds of communication to be used by the same appliance.

### Summary Of The Invention

According to a first aspect of the invention, the invention is characterised in that
c. a telephone network is coupled between the control point and the database and configured to return the corresponding IP address to the control point, wherein the database is configured to receive the telephone number and match the corresponding IP address, further wherein the control point is configured to coordinate obtaining the corresponding IP address from the database via the telephone network and transmitting the message to the recipient party over the internet Protocol network.
   According to a second aspect of the present invention the invention is characterised by :
c. querying a gateway (150) with the telephone number of the recipient (170) via the telephone network (140) wherein the gateway (150) is coupled to the telephone network (140):
d. providing an IP address corresponding to the telephone number of the recipient (170) to the control point (125); and
e. forwarding the message over the Internet Protocol network (130) to the telephone number of the recipient party (170), the method seamlessly placing the message from the calling party through the Internet Protocol (130) network to the telephone number of the recipient party (170).

The database preferably matches the telephone number of the recipient party to an Internet Protocol address which corresponds with the telephone number and return this corresponding Internet Protocol address to the controller. Finally, the Internet Protocol gateway responds to the conversion system and method by returning the internet Protocol address. This conversion system method then contacts an appropriate server associated with the Internet Protocol address and transmits the message over the Internet Protocol network. The message is then transmitted from the appropriate server to the telephone number of the recipient party. Once the message is transmitted to the telephone number of the recipient party, a communication link is established between the calling party and the recipient party via the Internet Protocol network. This communication link allows both the calling party and the recipient party to communicate with each other. Further, the Internet Protocol gateway has the messaging capabilities of an Intelligent Network service such as signalling system no. 7 protocol.

The present invention provides a conversion system and method which operates within an Intelligent Network service. Additionally, the present invention provides a conversion system and method which automatically transmits a message from a calling party to a telephone of a recipient party through an Internet Protocol network.

### Brief Description of the Drawings

Figure 1A illustrates a general block diagram showing a telecommunications system containing a preferred embodiment of the present invention.
Figure 1B illustrates a detailed block diagram of an Internet Protocol gateway of the preferred embodiment of the present invention.
Figure 2 illustrates a first sample configuration of the preferred embodiment of the present invention.
Figure 3 illustrates a first timing diagram of the first sample configuration of the preferred embodiment.
Figure 4 illustrates a second sample configuration of the preferred embodiment of the present invention.
Figure 5 illustrates a second timing diagram of the second sample configuration of the preferred embodiment.

### Detailed Description of the Preferred Embodiment of the Present Invention

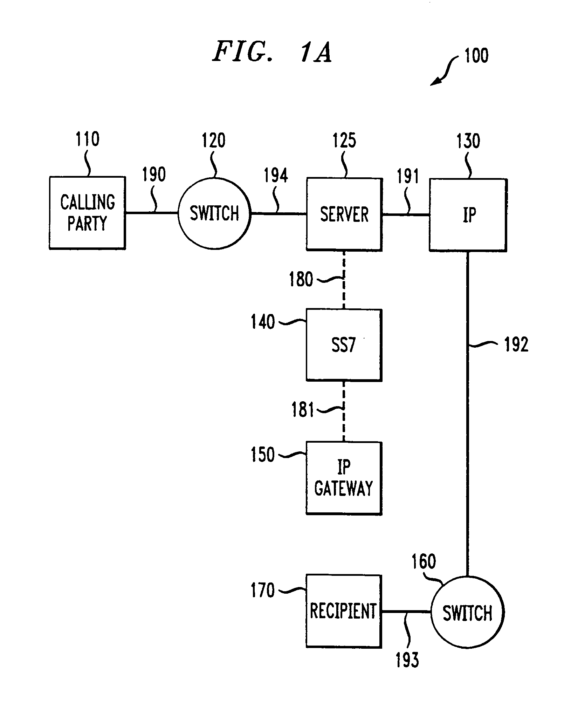

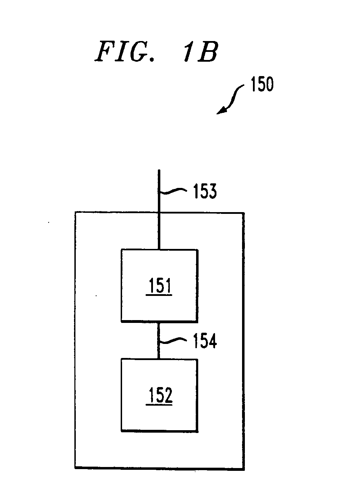

Figure 1 illustrates a diagram showing an Intelligent Network system 100 that includes the present invention therein. The present invention is a conversion system which allows a calling party to seamlessly place a call through an Internet Protocol network to a telephone number of a recipient party. Preferably, the present invention automatically matches a corresponding Internet Protocol address with a telephone number and returns the corresponding Internet Protocol address to a control point via a telephone network. The control point then transmits the call to the recipient party through the Internet Protocol network.

The Intelligent Network system 100 includes a calling party 110; switches 120 and 160; a server 125; an Internet Protocol network 130; a signalling system No. 7 (SS7) Network 140; an Internet Protocol gateway 150; a recipient 170; control links 180 and 181; and data links 190, 191, 192, 193, and 194. Portions of the Intelligent Network system 100 are illustrated for exemplary purposes only. For example, it would be apparent to those skilled in the art to utilize any number of switches, servers, Internet Protocol gateways, recipients, and calling parties. In particular, the switches 120 and 160 are service switching points (SSPs), visitor location registers (VLRs), or mobile service switching centers (MSCs), depending on the applications. It would also be apparent to those skilled in the art to utilize appropriate control links, data links, Internet Protocol networks, and SS7 networks to create a functional Intelligent Network.

The calling party 110 and the recipient 170 are preferably situated in remote locations. The switches 120 and 160 preferably act as a coordinator between elements within the Intelligent Network system 100. The calling party 110 is preferably coupled to the switch 120 via the data link 190. The switch 120 is preferably coupled to the server 125 via the data link 194. The server 125 is preferably coupled to the Internet Protocol network 130 via the data link 191. The server is also coupled to the SS7 network 140 via the control link 180. The Internet Protocol network 130 is preferably coupled to the switch 160 via the data link 192. The switch 160 is preferably coupled to the recipient 170 via the data link 193. The SS7 network 140 is preferably coupled to the Internet Protocol gateway 150 via the control link 181.

The control links 180 and 181 provide communication links between the server 125, the SS7 network 140 and the Internet Protocol gateway 150. The data links 190, 191, 192, 193, and 194 provide data links between the calling party 110, the switches 120 and 160, the server 125, the Internet Protocol network 130, and the recipient 170.

Figure 1B illustrates a detailed block diagram of the Internet Protocol gateway 150. The Internet Protocol gateway 150 preferably includes a controller 151 and a database 152. The Internet Protocol gateway 150 is preferably accessed through the SS7 network 140 (Figure 1A) by the server 125 (Figure 1A). The server 125 (Figure 1A) is preferably coupled to the Internet Protocol gateway 150 through a link 153 which is coupled between the controller 151 and the server 125 (Figure 1A). The server 125 (Figure 1A) via the link 153, preferably messages the controller 151 with a telephone number of the recipient. The telephone number of the recipient is preferably recognized by the Internet Protocol gateway 150 as a global title. Further, a sub-system number is preferably attached to the telephone number such that the Internet Protocol gateway 150 is properly instructed to return an Internet Protocol address which corresponds to the telephone number. Preferably, a new sub-system number is assigned to the Internet Protocol gateway 150.

Preferably, the controller 151 is coupled to the database 152 via a link 154. The database 152 preferably contains a plurality of telephone numbers and corresponding Internet Protocol addresses. In response to the telephone number transmitted from the server 125 (Figure 1A), the Internet Protocol gateway 150 preferably searches for this telephone number within the database and matches this telephone number belonging to the recipient with a corresponding Internet Protocol address. Additionally, the Internet Protocol gateway 150 preferably returns this corresponding Internet Protocol address to the server 125 (Figure 1A).

The Internet Protocol gateway 150 preferably conforms to standards established by the SS7 protocol. Because the Internet Protocol gateway 150 is compatible with the SS7 network 140, additional Internet Protocol gateways are capable of being added to the Intelligent Network system 100 (Figure 1A) while retaining communication between each of the Internet Protocol gateways via the SS7 network 140 (Figure 1A). The database 152 within Internet Protocol gateway 150 and the possible additional Internet Protocol gateways mentioned above are able to be globally updated, modified, and created via the SS7 network 140 (Figure 1A).

In a first alternate embodiment, multiple Internet Protocol gateways, similar to the Internet Protocol gateway 150 (Figures 1A and 1B), are coupled to the SS7 network 140. By utilizing multiple Internet Protocol gateways, there is an increased capacity, flexibility, and assurance of service. In addition, because the multiple Internet Protocol gateways are compatible with the SS7 network 140, the controller 151 and/or the database 152 within each Internet Protocol gateways is capable of being globally updated, modified, and created.

In a second alternate embodiment, the functionality of the Internet Protocol gateway 150 is incorporated into an already addressable existing element within the Intelligent Network system 100 (Figure 1A) such as a service switching point or a visitor location register. If the Internet Protocol gateway is incorporated into an already addressable existing element, no new sub-system number is required.

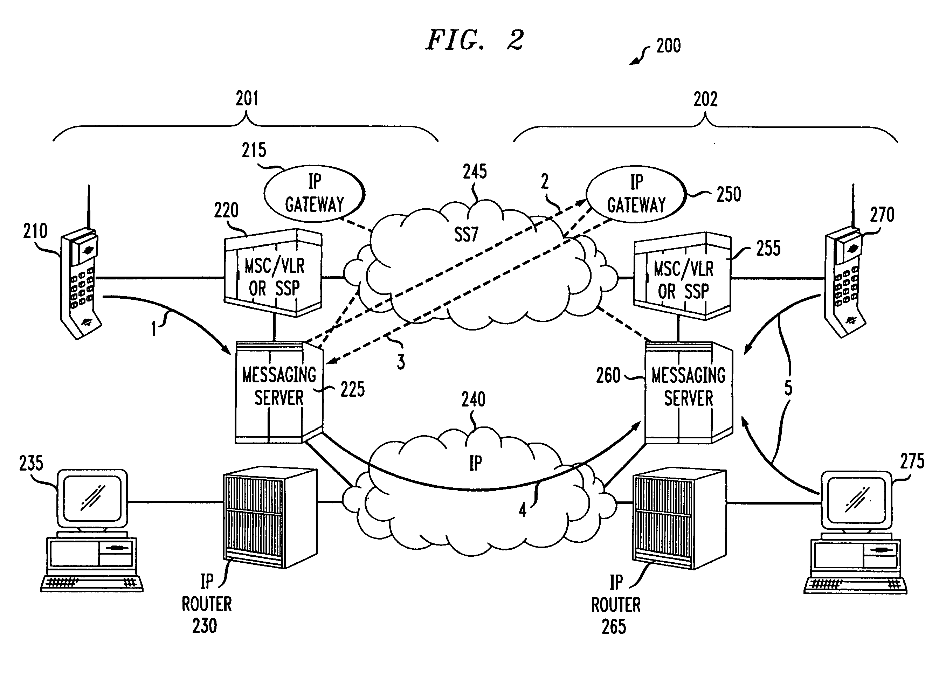

Figure 2 illustrates a first sample configuration 200 of the Intelligent Network system 100 (Figure 1A). The first sample configuration 200 preferably includes a calling party portion 201 and a recipient party portion 202. The calling party portion 201 and the recipient party portion 202 are coupled together via an SS7 network 245 and an Internet Protocol network 240. The calling party portion 201 preferably includes a telephone 210, the Internet Protocol gateway 215, a switch 220, a server 225, an Internet Protocol router 230, and a computer 235. The recipient party portion 202 preferably includes a telephone 270, the Internet Protocol gateway 250, a switch 255, a server 260, an Internet Protocol router 265, and a computer 275.

The Internet Protocol gateways 215 and 250, the servers 225 and 260, the switch 220, and the switch 255 are similar to the Internet Protocol gateway 150 (Figure 1A), the server 125 (Figure 1A), the switch 120 (Figure 1A), and the switch 160 (Figure 1A), respectively.

Portions of the first sample configuration 200 are illustrated for exemplary purposes only. For example, it would be apparent to those skilled in the art to utilize any number of switches, servers, Internet Protocol gateways, recipients, and calling parties. In particular, the first sample configuration 200 can have more than one recipient party portion 202.

By utilizing the first sample configuration 200, a calling party, by either utilizing the telephone 210 or the computer 235, is preferably capable of transmitting a message to a recipient party via the telephone 270 over the Internet Protocol network 240. This message includes voice messages, audible messages containing data, and the like.

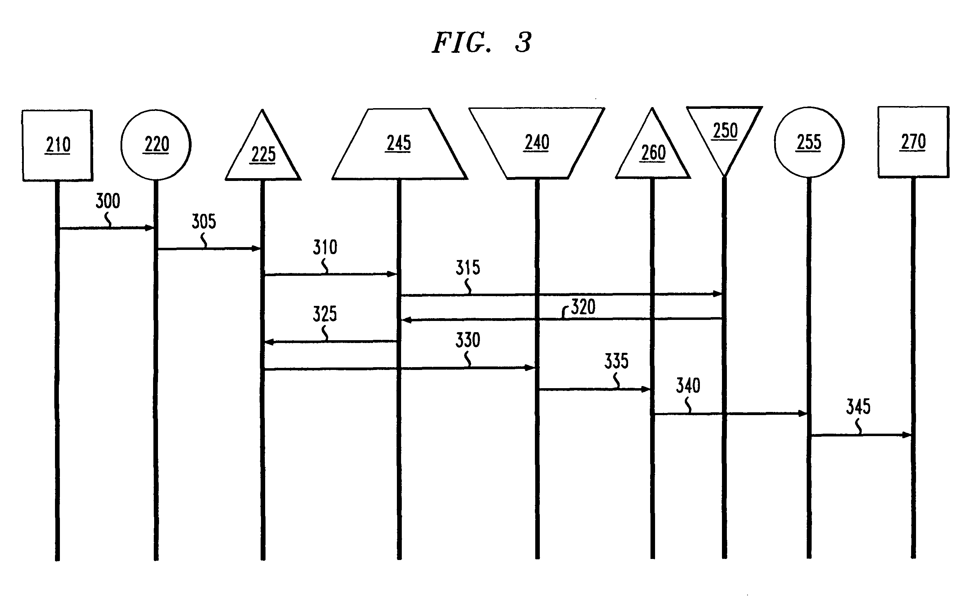

In Figure 3, a timing diagram illustrates interaction between the telephone 210, the Internet Protocol gateway 250, the switch 220, the server 225, the Internet Protocol network 240, the SS7 network 245, the server 260, the switch 255, and the telephone 270. First, at the step 300, the calling party dials a telephone number which corresponds to the recipient party and desires to leave a voice message for the recipient party. Then, the telephone 210 preferably contacts the swi tch 220 and includes the telephone number of the recipient party. Next, in the step 305, the switch 220 notifies the server 225 that the calling party wishes to reach the recipient party at this telephone number. The server 225 then interfaces with the SS7 network 245 in the step 310 and transmits the telephone number of the recipient party. In the step 315, the SS7 network 245 messages the Internet Protocol gateway 250 and submits a request to the Internet Protocol gateway with the telephone number of the recipient party. Next, the Internet Protocol gateway 250 then matches a corresponding Internet Protocol address to the telephone number of the recipient party.

Next, in the step 320, the Internet Protocol gateway 250 contacts the SS7 network 245. Then, in the step 325, the SS7 network 245 returns the corresponding Internet Protocol address belonging to the recipient party to the server 225. Next, the server 225 preferably contacts the Internet Protocol network 240 in the step 330. The Internet Protocol network 240 then preferably contacts the server 260 in response to the corresponding Internet Protocol address belonging to the recipient party in the step 335. The server 260 preferably services the same geographic area of the recipient party. Next, the server 260 contacts the switch 255 in response to instructions from the server 260 in the step 340. Finally, the switch 255 preferably couples with the telephone 270 belonging to the recipient party in the step 345.

As a result, a communication link is established between the recipient party through the telephone 270 and the calling party through the telephone 210. This communication link allows both the recipient party and the calling party to communicate with each other. The calling party and the recipient party are able to exchange voice messages, data encoded messages, and the like. Further, the communication link utilizes the Internet Protocol network 240 as a conduit to pass information between the calling party and the recipient party.

It will be apparent to those skilled in the art that steps may be deleted or substituted with other steps and that other steps may be added without changing the scope of the present invention as described in figures 2 and 3.

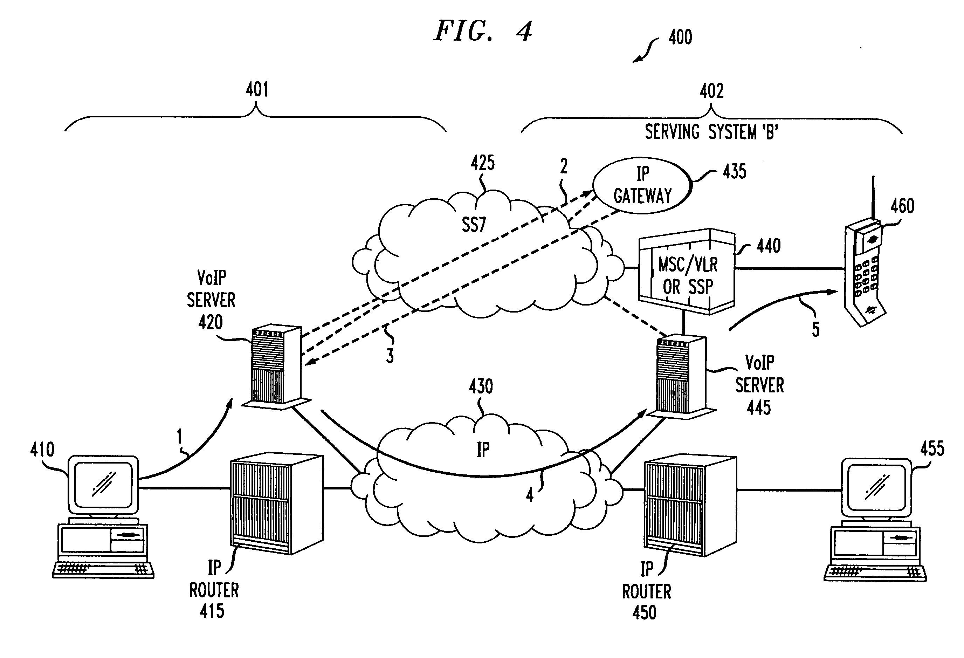

Figure 4 illustrates a second sample configuration 400 of the Intelligent Network system 100 (Figure 1A). The second sample configuration 400 preferably includes a calling party portion 401 and a recipient party portion 402. The calling party portion 401 and the recipient party portion 402 are coupled together via an SS7 network 425 and an Internet Protocol network 430. The calling party portion 401 preferably includes a computer 410, a server 420, and an lnternet Protocol router 415. The recipient party portion 402 preferably includes a telephone 460, an Internet Protocol gateway 435, a switch 440, a server 445, an Internet Protocol router 450, and a computer 455. The Internet Protocol gateway 435, the servers 420 and 445, the switch 440, are similar to the Internet Protocol gateway 150 (Figure 1A), the server 125 (Figure 1A), and the switch 120 (Figure 1A), respectively.

Portions of the second sample configuration 400 are illustrated for exemplary purposes only. For example, it would be apparent to those skilled in the art to utilize any number of switches, servers, Internet Protocol gateways, recipients, and calling parties. In particular, the second sample configuration 400 can have more than one recipient party portion 402.

By utilizing the second sample configuration 400, a calling party, by operating the computer 410, is preferably capable of transmitting a message to a recipient party via the telephone 460 over the Internet Protocol network 430.

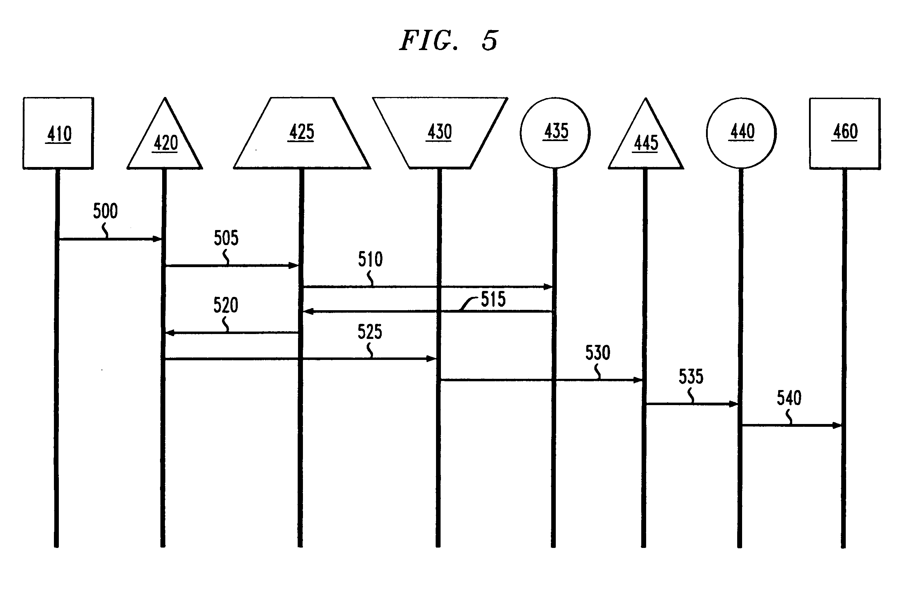

In Figure 5, a timing diagram illustrates interaction between the computer 410, the server 420, the SS7 network 425, the Internet Protocol network 430, the Internet Protocol gateway 435, the switch 440, the server 445, and the telephone 460. First, at the step 500, the calling party dials a destination telephone number which corresponds to the recipient party and desires to leave a message for the recipient party. Then, the computer 410 preferably contacts the server 420 and includes the destination telephone number of the recipient party. Next, in the step 505, the server 420 preferably then interfaces with the SS7 network 425 and transmits the destination telephone number of the recipient party. In step 510, the SS7 network 425 messages the Internet Protocol gateway 435 and submits a request to the Internet Protocol gateway 435 with the destination telephone number of the recipient party. Next, the Internet Protocol gateway 435 then matches a corresponding Internet Protocol address to the destination telephone number of the recipient party.

Next, in the step 515, the Internet Protocol gateway 435 contacts the SS7 network 425. Then, in the step 520, the SS7 network 425 returns the corresponding Internet Protocol address belonging to the recipient party to the server 420. Next, the server 420 preferably contacts the Internet Protocol network 430 in the step 525. The Internet Protocol network 430 then preferably messages the server 445 in response to the corresponding Internet Protocol address belonging to the recipient party in the step 530. The Internet Protocol network 430 preferably utilizes the particular server 445, because the server 445 preferably services the same geographic area of the recipient party. Next, the server 445 contacts the switch 440 in response to instructions from the server 445 in the step 535. Finally, the switch 440 preferably couples with the telephone 460 belonging to the recipient party in the step 540.

As a result, a communication link is established between the recipient party through the telephone 460 and the calling party through the computer 410. This communication link allows both the recipient party and the calling party to communicate with each other. Further, the communication link utilizes the Internet Protocol network 430 as a conduit to pass information between the calling party and the recipient party.

It will be apparent to those skilled in the art that steps may be deleted or substituted with other steps and that other steps maybe added without changing the scope of the present invention as described in Figures 4 and 5.

The present invention has been described in terms of specific embodiments incorporating details to facilitate the understanding of the principles of construction and operation of the invention. Such reference herein to specific embodiments and details thereof is not intended to limit the scope of the claims appended hereto. It will be apparent to those skilled in the art that modifications may be made in the embodiments chosen for illustration without departing from the scope of the invention.

Specifically, it will be apparent to one of ordinary skill in the art that the device of the present invention could be implemented in several different ways and the bookmark system and method disclosed above is only illustrative of the preferred embodiment of the invention and is in no way a limitation.

## Claims

1. A system for transmitting a message over an Internet Protocol network (130) from a calling party (110) to a telephone number of a recipient party (170), the system comprising:
a. a database (152) for storing the telephone number of the recipient party (170) and a corresponding IP address; and
b. a control point (125) coupled to the Internet Protocol network (130) and the calling party (110): **characterised in that**
c. a telephone network (140) is coupled between the control point (125) and the database (152) and configured to return the corresponding IP address to the control point (125), wherein the database (152) is configured to receive the telephone number and match the corresponding IP address, further wherein the control point (125) is configured to coordinate obtaining the corresponding IP address from the database (152) via the telephone network (140) and transmitting the message to the recipient party (170) over the internet Protocol network (130).

2. The system according to claim 1 wherein the control point (125) is a server.

3. The system according to claim 1 wherein the database (152) adheres to an SS7 protocol.

4. The system according to claim 1 wherein the database (152) is configured to be modified globally.

5. The system according to claim 1 wherein the telephone network (140) utilizes an SS7 protocol.

6. A method of placing a message originating from a calling party (110) through an Internet Protocol network to a telephone number of a recipient party (170), the method comprising the following steps:
a. inputting the telephone number of the recipient party (170) via an input device, wherein the input device is coupled to the Internet Protocol network (130): and
b. transmitting the telephone number to a control point (125), wherein the control point (125) is coupled to the input device, the Internet Protocol network (130), and a telephone network (140); **characterised by**:
c. querying a gateway (150) with the telephone number of the recipient (170) via the telephone network (140) wherein the gateway (150) is coupled to the telephone network (140);
d. providing an IP address corresponding to the telephone number of the recipient (170) to the control point (125); and
e. forwarding the message over the Internet Protocol network (130) to the telephone number of the recipient party (170), the method seamlessly placing the message from the calling party through the Internet Protocol (130) network to the telephone number of the recipient party (170).

7. The method according to claim 6 further comprising matching the telephone number of the recipient party (170) to the IP address via a database (152) within the gateway (150).

8. The method according to claim 7 further comprising globally updating the database (152) via the telephone network (140).

9. The method according to claim 6 wherein the gateway (150) adheres to and is compatible with an SS7 protocol.

10. The method according to claim 6 wherein the telephone network (140) utilizes an SS7 Protocol.

11. The method according to claim 6 wherein the input device is a computer.

12. The method according to claim 6 wherein the input device is a telephone.

13. The method according to claim 6 wherein placing the message comprises transmitting a telephone call, and forwarding the message comprises completing the telephone call.

14. The method according to claim 7 further comprising updating the telephone number and the corresponding IP address within the database (152).

15. The method according to claim 7 further comprising selecting the database (152) from a plurality of databases in response to the telephone number.

16. The method according to claim 15 wherein the plurality of databases are coupled to the telephone network (140) and adhere to an SS7 protocol.

17. The method according to claim 15 further comprising globally modifying the plurality of databases via the telephone network (140).

18. The method according to claim 6, further comprising establishing a communications link between the input device of the calling party and a telephone of the recipient party, wherein the step of establishing the communications link comprises the following steps:
a. transmitting the telephone number from the input device to the control point (125), wherein the telephone number is configured to correspond to the telephone of the recipient party (170);
b. transmitting the telephone number from the control point (125) to the gateway (150) via the telephone network (140);
c. converting the telephone number into the corresponding Internet Protocol address;
d. returning the corresponding Internet Protocol address to the control point (125) via the telephone network (140); and
e. connecting the input device anc the telephone of the recipient party via the Internet Protocol network (130).

19. The method according to claim 18 further comprising matching the telephone number to the corresponding Internet Protocol address within a database (152).

20. The method according to claim 19 wherein the database (152) adheres to an SS7 protocol.

## Patentansprüche

1. System zum Übertragen einer Nachricht über ein Internet-Protocol-Netz (130) von einer Anruferseite (110) zu einer Telefonnummer einer Empfängerseite (170), das System umfassend:
a. eine Datenbank (152) zum Speichern der Telefonnummer der Empfängerseite (170) und einer entsprechenden IP-Adresse; und
b. einen Kontrollpunkt (125), der mit dem Internet-Protocol-Netz (130) und der Anruferseite (110) gekoppelt ist; **dadurch gekennzeichnet, dass**:
c. ein Telefonnetz (140) zwischen den Kontrollpunkt (125) und die Datenbank (152) gekoppelt und zur Zurückgabe der entsprechenden IP-Adresse an den Kontrollpunkt (125) konfiguriert ist; wobei die Datenbank (152) zum Empfang der Telefonnummer und zur Zuordnung der entsprechenden IP-Adresse konfiguriert ist, wobei ferner der Kontrollpunkt zur Koordinierung der Gewinnung der entsprechenden IP-Adresse aus der Datenbank (152) über das Telefonnetz (140) und der Übertragung der Nachricht an die Empfängerseite (170) über das Internet-Protocol-Netz (130) konfiguriert ist.

2. System gemäß Anspruch 1, wobei der Kontrollpunkt (125) ein Server ist.

3. System gemäß Anspruch 1, wobei die Datenbank (152) an einem SS7-Protokoll festhält.

4. System gemäß Anspruch 1, wobei die Datenbank (152) zur globalen Modifizierung konfiguriert ist.

5. System gemäß Anspruch 1, wobei das Telefonnetz (140) ein SS7-Protokoll nutzt.

6. Verfahren zum Platzieren einer von einer Anruferseite (110) stammenden Nachricht über ein Internet-Protocol-Netz zu einer Telefonnummer einer Empfängerseite (170), das Verfahren umfassend die folgenden Schritte:
a. Eingeben der Telefonnummer der Empfängerseite (170) über ein Eingabegerät, wobei das Eingabegerät mit dem Internet-Protocol-Netz (130) gekoppelt ist; und
b. Übertragen der Telefonnummer zu einem Kontrollpunkt (125), wobei der Kontrollpunkt (125) mit dem Eingabegerät, dem Internet-Protocol-Netz (130) und einem Telefonnetz (140) gekoppelt ist; **gekennzeichnet durch**:
c. Abfragen eines Gateways (150) mit der Telefonnummer des Empfängers (170) über das Telefonnetz (140), wobei das Gateway (150) mit dem Telefonnetz (140) gekoppelt ist;
d. Bereitstellen einer lP-Adresse entsprechend der Telefonnummer des Empfängers (170) an den Kontrollpunkt (125); und
e. Weiterleiten der Nachricht über das Internet-Protocol-Netz (130) zur Telefonnummer der Empfängerseite (170), wobei das Verfahren die Nachricht nahtlos von der Anruferseite über das Internet-Protocol-Netz (130) zur Telefonnummer der Empfängerseite (170) platziert.

7. Verfahren gemäß Anspruch 6, ferner umfassend das Zuordnen der Telefonnummer der Empfängerseite (170) zur IP-Adresse über eine Datenbank (152) innerhalb des Gateways (150).

8. Verfahren gemäß Anspruch 7, ferner umfassend das globale Aktualisieren der Datenbank (152) über das Telefonnetz (140).

9. Verfahren gemäß Anspruch 6, wobei das Gateway (150) an einem SS7-Protokoll festhält und mit diesem kompatibel ist.

10. Verfahren gemäß Anspruch 6, wobei das Telefonnetz (140) ein SS7-Protokoll nutzt.

11. Verfahren gemäß Anspruch 6, wobei das Eingabegerät ein Computer ist.

12. Verfahren gemäß Anspruch 6, wobei das Eingabegerät ein Telefon ist.

13. Verfahren gemäß Anspruch 6, wobei das Platzieren der Nachricht das Übertragen eines Telefonanrufs umfasst und wobei das Weiterleiten der Nachricht das Vollenden des Telefonanrufs umfasst.

14. Verfahren gemäß Anspruch 7, ferner umfassend das Aktualisieren der Telefonnummer und der entsprechenden IP-Adresse innerhalb der Datenbank (152).

15. Verfahren gemäß Anspruch 7, ferner umfassend das Auswählen der Datenbank (152) aus einer Vielzahl von Datenbanken als Reaktion auf die Telefonnummer.

16. Verfahren gemäß Anspruch 15, wobei die Vielzahl von Datenbanken mit dem Telefonnetz (140) gekoppelt und an einem SS7-Protokoll festhält.

17. Verfahren gemäß Anspruch 15, ferner umfassend das globale Modifizieren der Vielzahl von Datenbanken über das Telefonnetz (140).

18. Verfahren gemäß Anspruch 6, ferner umfassend das Herstellen einer Kommunikationsverbindung zwischen dem Eingabegerät der Anruferseite und einem Telefon der Empfängerseite, wobei der Schritt des Herstellens der Kommunikationsverbindung die folgenden Schritte umfasst:
a. Übertragen der Telefonnummer vom Eingabegerät zum Kontrollpunkt (125), wobei die Telefonnummer so konfiguriert ist, dass sie dem Telefon der Empfängerseite (170) entspricht;
b. Übertragen der Telefonnummer vom Kontrollpunkt (125) zum Gateway (150) über das Telefonnetz (140);
c. Umsetzen der Telefonnummer in die entsprechende Internet-Protocol-Adresse;
d. Zurückgeben der entsprechenden Internet-Protocol-Adresse zum Kontrollpunkt (125) über das Telefonnetz (140); und
e. Verbinden des Eingabegeräts und des Telefons der Empfängerseite über das Internet-Protocol-Netz (130).

19. Verfahren gemäß Anspruch 18, ferner umfassend das Zuordnen der Telefonnummer zur entsprechenden Internet-Protocol-Adresse innerhalb einer Datenbank (152).

20. Verfahren gemäß Anspruch 19, wobei die Datenbank (152) an einem SS7-Protokoll festhält.

## Revendications

1. Système permettant de transmettre un message sur un réseau sous protocole Internet (130) en provenance d'un appelant (110) en direction d'un numéro de téléphone d'un destinataire (170), le système comportant :
a. une base de données (152) destinée à stocker le numéro de téléphone du destinataire (170) et une adresse IP correspondante ; et
b. un centre directeur (125) couplé sur le réseau sous protocole Internet (130) et sur l'appelant (110) ; **caractérisé en ce que** :
c un réseau téléphonique (140) est couplé entre le centre directeur (125) et la base de données (152) et est configuré pour renvoyer l'adresse IP correspondante au centre directeur (125), dans lequel la base de données (152) est configurée pour recevoir le numéro de téléphone et comparer l'adresse IP correspondante, dans lequel par ailleurs le centre directeur (125) est configuré pour coordonner l'obtention de l'adresse IP correspondante en provenance de la base de données (152) par le biais du réseau téléphonique (140) et la transmission du message au destinataire (170) sur le réseau sous protocole Internet (130).

2. Système selon la revendication 1, dans lequel le centre directeur (125) est un serveur.

3. Système selon la revendication 1, dans lequel la base de données (152) obéit à un protocole SS7.

4. Système selon la revendication 1, dans lequel la base de données (152) est configurée pour être modifiée globalement.

5. Système selon la revendication 1, dans lequel le réseau téléphonique (140) utilise un protocole SS7.

6. Procédé permettant de placer un message provenant d'un appelant (110) par le biais d'un réseau sous protocole Internet à un numéro de téléphone d'un destinataire (170), le procédé comportant les étapes suivantes :
a. l'entrée du numéro de téléphone du destinataire (170) par le biais d'un dispositif d'entrée, dans lequel le dispositif d'entrée est couplé au réseau sous protocole Internet (130) ; et
b. la transmission du numéro de téléphone à un centre directeur (125), dans lequel le centre directeur (125) est couplé sur le dispositif d'entrée, sur le réseau sous protocole Internet (130), et sur un réseau téléphonique (140); **caractérisé par** :
c. l'interrogation d'une passerelle (150) avec le numéro de téléphone du destinataire (170) par le biais du réseau téléphonique (140), dans lequel la passerelle (150) est couplée sur le réseau téléphonique (140);
d. la fourniture d'une adresse IP correspondant au numéro de téléphone du destinataire (170) au centre directeur (125) ; et
e. l'acheminement du message sur le réseau sous protocole Internet (130) au numéro de téléphone du destinataire (170), le procédé plaçant de manière transparente le message en provenance de l'appelant par le biais du réseau sous protocole Internet (130) au numéro de téléphone du destinataire (170).

7. Procédé selon la revendication 6, comportant par ailleurs la comparaison du numéro de téléphone du destinataire (170) à l'adresse IP par le biais d'une base de données (152) dans la passerelle (150).

8. Procédé selon la revendication 7, comportant par ailleurs la mise à jour globale de la base de données (152) par le biais du réseau téléphonique (140).

9. Procédé selon la revendication 6, dans lequel la passerelle (150) obéit à un protocole SS7 et est compatible avec celui-ci.

10. Procédé selon la revendication 6, dans lequel le réseau téléphonique (140) utilise un protocole SS7.

11. Procédé selon la revendication 6, dans lequel le dispositif d'entrée est un ordinateur.

12. Procédé selon la revendication 6, dans lequel le dispositif d'entrée est un téléphone.

13. Procédé selon la revendication 6, dans lequel placer le message comporte la transmission d'un appel téléphonique, et dans lequel acheminer le message comporte terminer l'appel téléphonique.

14. Procédé selon la revendication 7, comportant par ailleurs la mise à jour du numéro de téléphone et l'adresse IP correspondante dans la base de données (152).

15. Procédé selon la revendication 7, comportant par ailleurs la sélection de la base de données (152) dans une pluralité de bases de données en fonction du numéro de téléphone.

16. Procédé selon la revendication 15, dans lequel les bases de données de la pluralité de bases de données sont couplées sur le réseau téléphonique (140) et obéissent à un protocole SS7.

17. Procédé selon la revendication 15, comportant par ailleurs la modification globale de la pluralité de bases de données par le biais du réseau téléphonique (140).

18. Procédé selon la revendication 6, comportant par ailleurs l'établissement d'une liaison de communication entre le dispositif d'entrée de l'appelant et un téléphone du destinataire, dans lequel l'étape consistant à établir la liaison de communication comporte les étapes suivantes :
a. la transmission du numéro de téléphone en provenance du dispositif d'entrée au centre directeur (125), dans lequel le numéro de téléphone est configuré pour correspondre au téléphone du destinataire (170) ;
b. la transmission du numéro de téléphone en provenance du centre directeur (125) à la passerelle (150) par le biais du réseau téléphonique (140) ;
c. la conversion du numéro de téléphone en l'adresse IP correspondante ;
d. le renvoi de l'adresse IP correspondante au centre directeur (125) par le biais du réseau téléphonique (140) ; et
e. la connexion du dispositif d'entrée et du téléphone du destinataire par le biais du réseau sous protocole Internet (130).

19. Procédé selon la revendication 18, comportant par ailleurs la comparaison du numéro de téléphone à l'adresse correspondante sous protocole Internet dans une base de données (152).

20. Procédé selon la revendication 19, dans lequel la base de données (152) obéit à un protocole SS7.
